# EUROPEAN PATENT SPECIFICATION

(11) **EP 2 364 916 B1**
(45) Date of publication and mention of the grant of the patent: **31.10.2012**
(21) Application number: 11156203.9
(22) Date of filing: 28.02.2011
(51) Int. Cl.: B65B 23/14, B65B 35/44, B65G 17/26, B65G 47/82, B65G 47/84

(54) **Plant for forming and for continuous synchronised transferring of compact groups of products drawn near one another along the transfer path**
Anlage zur Erzeugung und zur kontinuierlichen synchronisierten Übertragung kompakter Gruppen von Produkten, die nahe nebeneinander über den Übertragungsweg gezogen werden
Installation de formation et de transfert synchronisé continu de groupes compacts de produits conçus à proximité d'un autre le long du chemin de transfert

(30) Priority: 09.03.2010 IT MI20100385
(43) Date of publication of application: 14.09.2011
(73) Proprietor: Eurosicma S.p.A., 20125 Milano (IT)
(72) Inventor: Redaelli, Marco, 20060 Cassina De' Pecchi (MI) (IT)
(74) Representative: Branca, Emanuela

(56) References cited:
- WO-A1-02/26601
- DE-A1-102007 005 550
- DE-U1- 20 003 754
- US-A- 4 590 743
- US-B1- 6 182 814

## Description

The present invention refers to a plant for making and for continuous-synchronized transferring of compact groups of products drawn near one another "edgeways" along the transfer path.

In particular the present invention refers to an innovative plant for the continuous input of groups of food products to a packaging machine, of the flow-pack type or the like.

In the input systems of packaging machines, there often arises the need of moving the products along two directions at right angle, transferring them from one direction to the other while they are kept in a suitable group intended to be packaged.

For example, this may be required for adjusting the speed of arrival of the products to that of the packaging machine and/or the arrangement and spacing of the products and of the groups of products.

A typical case regards packaging stacks or adjacent and edgeways arranged groups of biscuits, crackers or the like.

The operating speed and fragility of the food products complicate transfer operations.

Systems with paddles or mobile barriers are known, but often the return movement of the paddles hinders or slows the operation of the plant, for example interfering with the movement of one or both conveyors. Furthermore, in order to make the production process continuous, there currently arises the need of not interrupting the input of the products even during the travel to reposition the paddles after unloading a finished group to the packaging machine.

Document US 6 182 814 B1 discloses a plant corresponding to the features of the preamble of claim 1.

An object of the present invention is to provide a plant for making and for continuous-synchronized transferring of compact groups of products drawn near to one another edgeways along the transfer path capable of overcoming the aforementioned drawbacks of the prior art in an extremely simple, inexpensive and particularly functional manner.

Another object is that of providing a plant for making and for continuous-synchronized transferring of compact groups of products drawn near to one another edgeways along the transfer path which does not require interrupting or slowing the input of the products even during the travel to reposition the paddles after unloading a finished group to the packaging machine. These objects according to the present invention are attained by providing a plant for making and for continuous-synchronized transferring compact groups of products drawn near to one another edgeways along the transfer path as outlined in claim 1.

Further characteristics of the invention are outlined by the subsequent claims.

Characteristics and advantages of a plant for making and for continuous-synchronized transferring of compact groups of products drawn near to one another edgeways along the transfer path according to the present invention shall be more apparent from the following description, provided by way of non-limiting example, with reference to the attached schematic drawings wherein:
figure 1 is an elevational schematic view of a plant for making and for continuous-synchronized transferring of compact groups of products drawn near to one another edgeways along the transfer path;
figures 2-9 are cross-sectional schematic views of different steps for making and for continuous-synchronized transferring of compact groups of products drawn near to one another edgeways along the transfer path;
figure 10 is a schematic view of elements forming the plant; and
figures 11-18 are cross-sectional schematic views of different steps for the input of the products to the internal section of the plant dedicated to the formation and continuous-synchronized transferring of compact groups of products drawn near to one another edgeways along the transfer path.

With reference to the figures, a plant for making and for continuous-synchronized transferring of compact groups of products drawn near to one another edgeways along the transfer path according to the present invention is shown with the reference numeral 10.

The plant comprises an input conveyor 11 for the arrival of products 51 and an output conveyor 13 for the evacuation of groups 50 of products 51.

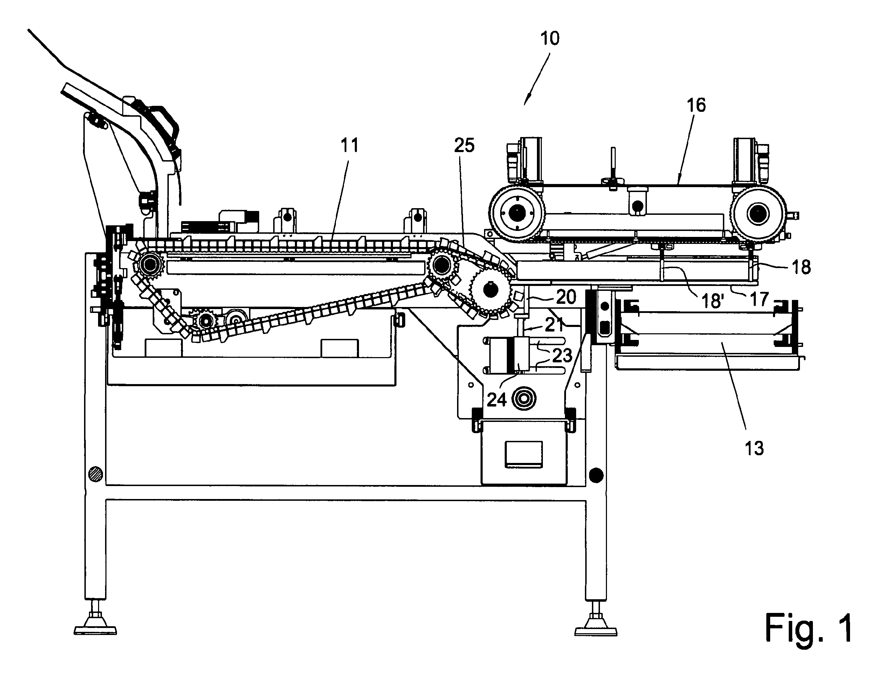

In the example shown in figure 1 such conveyors 11 and 13 are orthogonal to each other.

A transfer device 16 is provided between the two conveyors.

In the plant shown in figure 1, the products 51 are biscuits or the like, input to the transfer device 16 edgeways along the transfer path.

For the guided transfer, the device 16 comprises belt movements which move the paddle elements 18, 18'.

In particular, the paddles 18, 18' have an active path for transferring the products between a pick-up point downstream of the input conveyor 11 and a delivery point in the output conveyor 13. Along the active path the paddles 18, 18' lean from upwards on the area for transferring products between the conveyors.

As observable from the figures, the paddles 18, 18' are used in pairs arranged ahead and after each group of products 50 to be moved along the transfer path.

In particular, the belt movements are two separate movements, parallel and independently motorized by motors, such as for example brushless motors.

The control of the motors is suitably synchronized by a per se known control unit.

As it shall be apparent hereinafter, the independent movement of the paddles 18, 18' allows continuously forming pairs of paddles 18, 18' right from the beginning of the movement path.

The two paddles 18, 18' of the same pair can be separated at the end of the path for moving the group 50 of products 51.

The paddles can actually alternatingly become either a rear thruster or a front counter-thruster of subsequent pairs.

Advantageously, the front paddle 18 proceeds in its movement direction to follow the looped path of the respective movement and return to the beginning of the movement area as a rear thrust paddle. The rear paddle 18' recedes, instead, until it becomes a front paddle for the subsequent group of products at the beginning of the movement path.

This allows avoiding any interference and the movements within the plant are simplified and quickened.

With reference to figure 1, in the embodiment of the principles of the invention, each system or movement group in turn comprises a pair of parallel toothed belts.

Each pair is wound on respective toothed pulleys which are arranged coaxial to the two ends of the movement path provided by the paddles 18, 18'.

The pulleys of each end are mounted on a corresponding motorized coaxial shaft.

According to the invention the device 16 further comprises an auxiliary paddle element 20 synchronically mobile with the paddle elements 18, 18' to provide a front auxiliary counter-thruster for each new group of products being formed at the first stretch of the transfer path.

In particular such auxiliary paddle element 20 serves for receiving and compacting products 51 both during the transfer of a previously finished group 50 and during the travel to reposition the paddles 18, 18' once the finished product 50 is unloaded onto the conveyor 13.

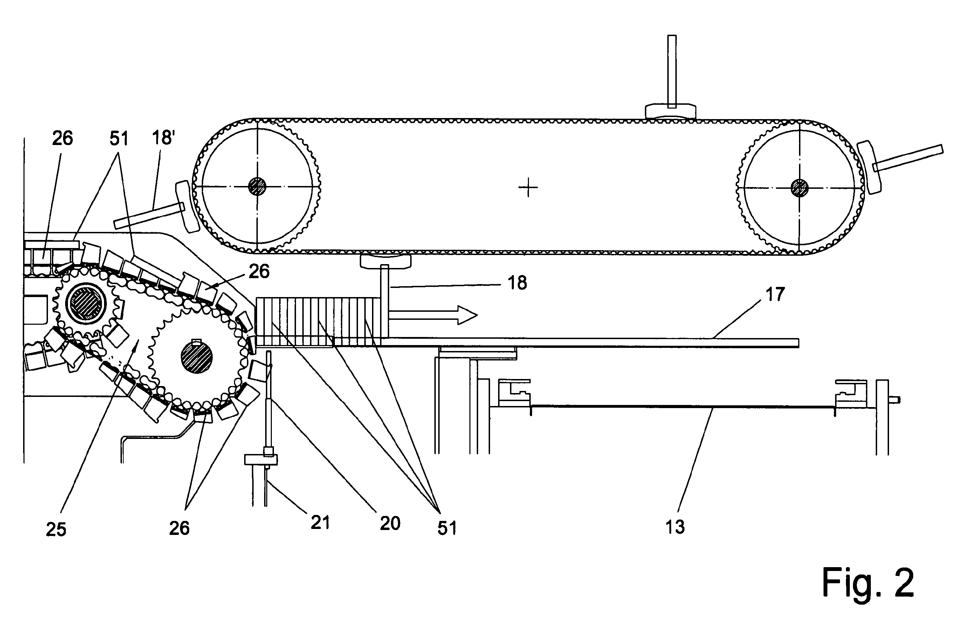

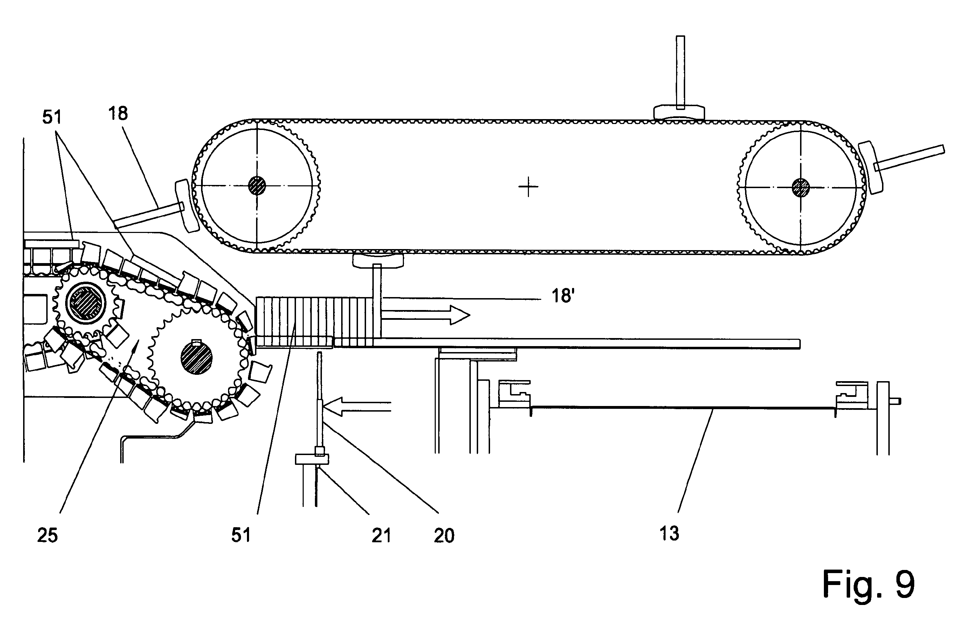

The synchronisation of the auxiliary paddle element 20 with the paddles 18, 18' is shown in the subsequent operating sequences observable in figures 2-9.

At the beginning of the cycle, figure 2, the rear paddle 18' is immobile upstream of the device 16 while the front paddle 18 advances compacting - behind it - the products 51 input one at a time.

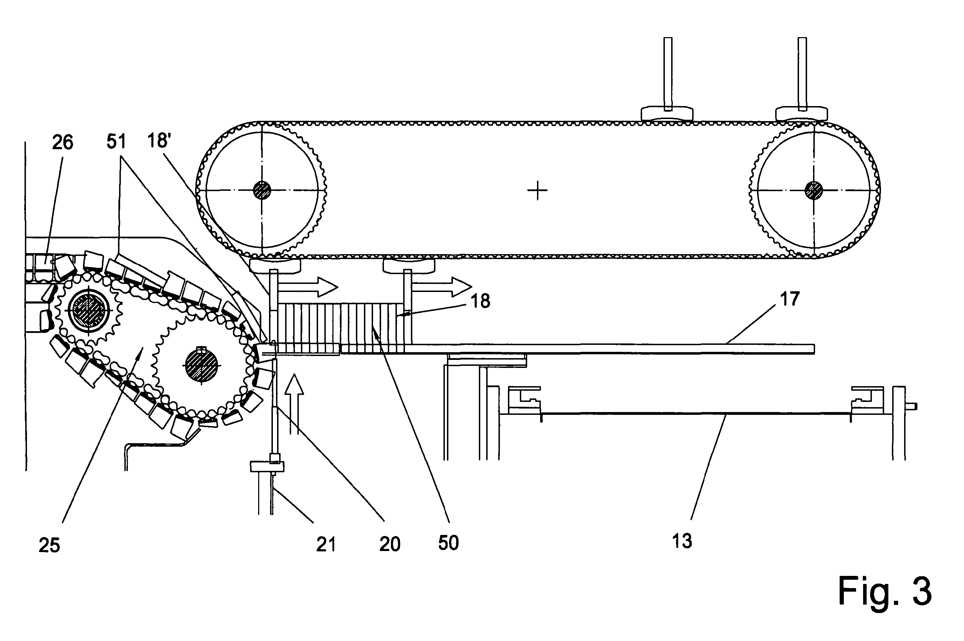

Upon reaching a predetermined number of products 51, figure 3, the rear paddle 18' moves compacting - at the rear part - the group 50 of products 51 without interrupting the advancement thereof.

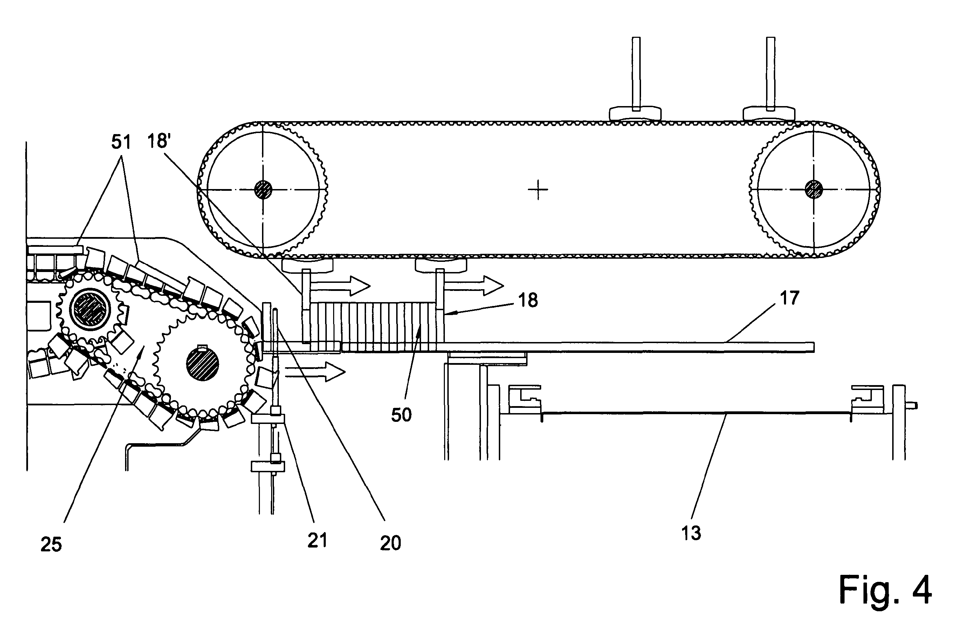

In such condition, figure 4, where both the front paddle 18 and the rear paddle 18' advance along the advancement path, the new input products are compacted by the auxiliary pad 20 which replaces the temporary absence of the front paddle 18.

Thus, the production cycle is neither slowed nor interrupted.

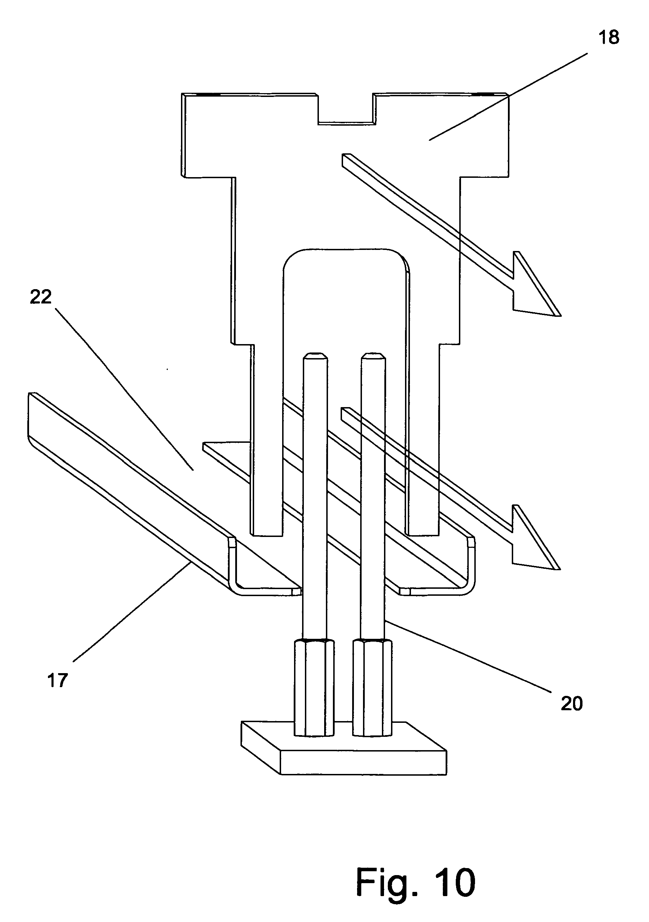

As shown in figure 4, the auxiliary paddle 20 moves orthogonally to the support surface 17 of the products between a first position, in which it is entirely beneath the surface 17, and a second position in which it projects at least partly above the surface 17 through a relative loophole 22, observable in figure 10.

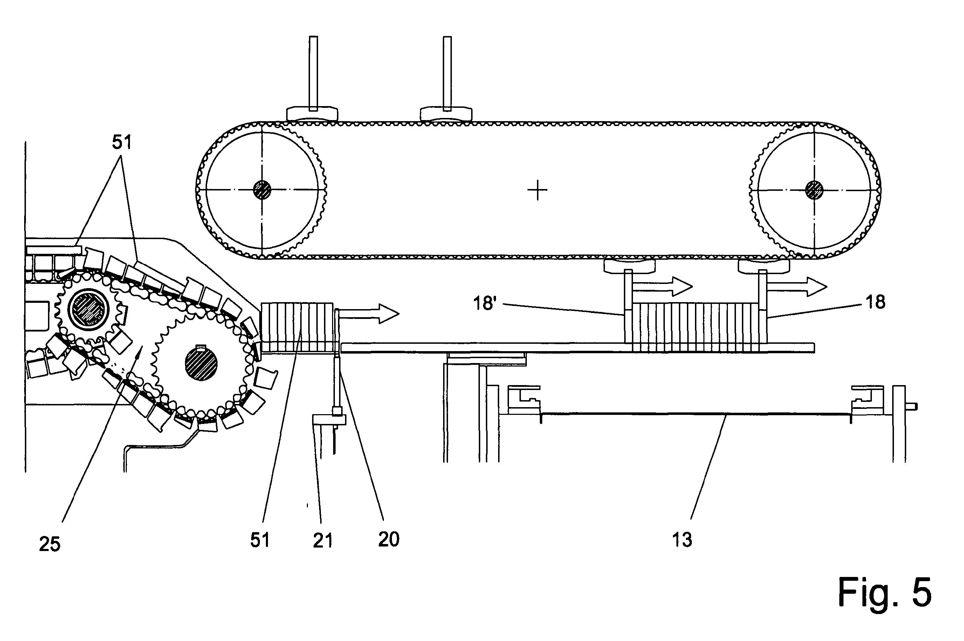

In order to accumulate the products 51, also the auxiliary paddle element 20 is mobile along the advancement path as observable in figure 5.

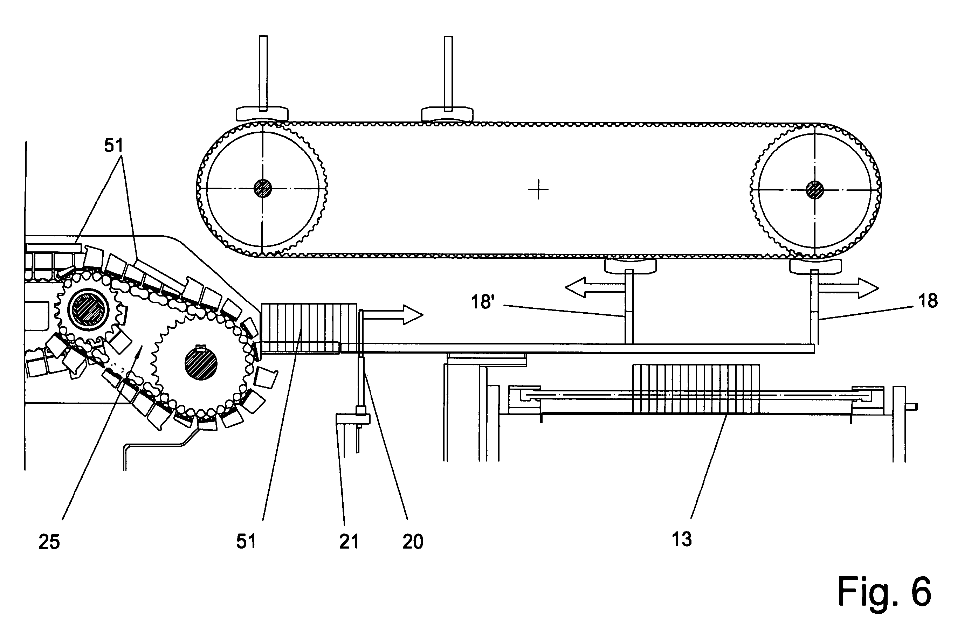

Upon completing the unloading of the previously finished group 50 of products 51, figure 6, the paddle element 18 which forms the front counter-thruster proceeds along a back stretch of the looped path to return to the beginning of the transfer path and become rear thruster of a new forming group, while the paddle element which forms the rear thruster recedes along the transfer path to return towards the beginning and become a counter-thruster of the new forming group.

New forming group which is currently kept compact advancing only by the auxiliary paddle element 20.

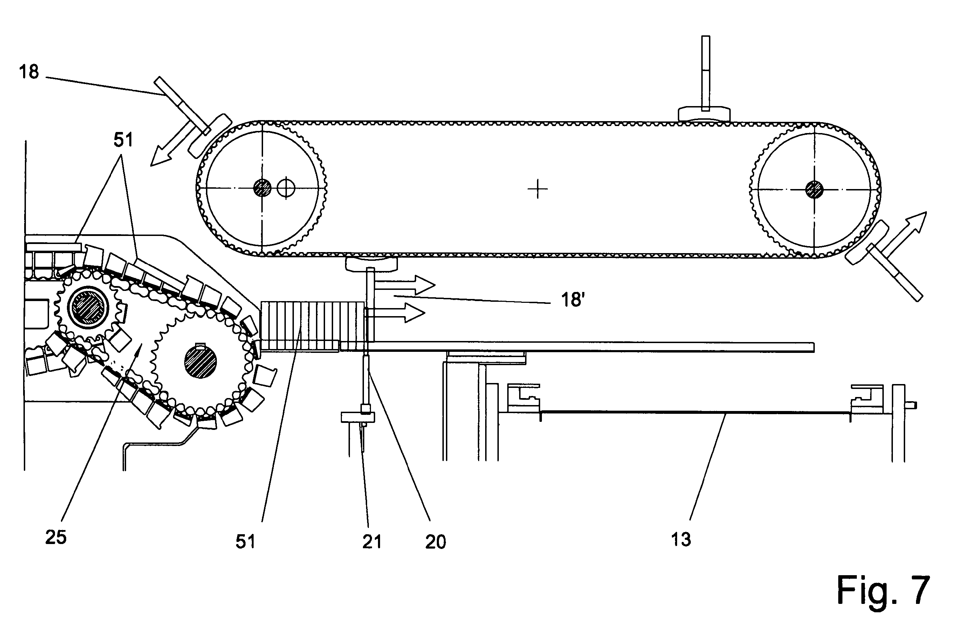

Once the paddle element 18' comes to contact with the products, figure 7, there is a brief interval in which both such paddle element 18' and the auxiliary paddle element 20 proceed combined.

Such superimposition can be obtained due to the particular geometry of the paddle element and of the auxiliary paddle element 20.

In the example of figure 10 it is shown how the paddle elements 18, 18' can actually be U-shaped to accommodate inside them at least partly the auxiliary paddle element 20, preferably fork-shaped.

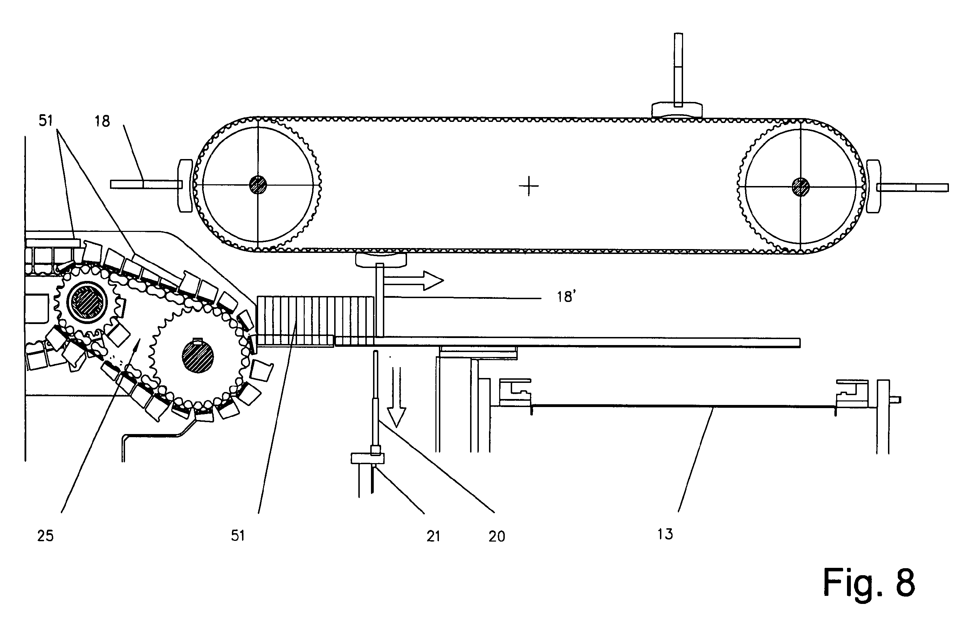

After this brief stretch of combined advancement, the auxiliary paddle element 20 lowers beneath the support surface 17, as shown in figure 8, while the paddle element 18' keeps the input products 51 compacted in advancement.

Now the auxiliary paddle element 20 is moved in the direction opposite to the direction of advancement of the products to return to the start position of the cycle of figure 2.

As shown in the example of figure 1, the movements of the auxiliary paddle element 20, i.e. both the parallel translation and the translation orthogonal to the support surface 17 of the products, can be obtained by means a relative slide 21 mobile beneath such surface 17 on guides parallel 23 and orthogonal 24 to the support surface 17.

Alternatively, it can be provided for that the slide 21 be mobile only parallel to the support surface 17 and that the auxiliary paddle element 20 be actually made of two telescopic coupling elements so that in retracted position it is located beneath the surface, while in extracted position it passes through the loophole 22 of the surface 17 to contact the products. Preferably the paddle elements 18, 18' and the auxiliary paddle element 20 can be independently motorized.

The plant 10 further comprises between the first conveyor 11 and the device 16 a chain 25 consisting of a series of increasing bearings 26.

Such particular arrangement of the supports 26 is particularly advantageous in cooperation with the rotary paddles 18, 18' so as to obtain the "edgeways" position of the products input lying flat and keeping them in such position.

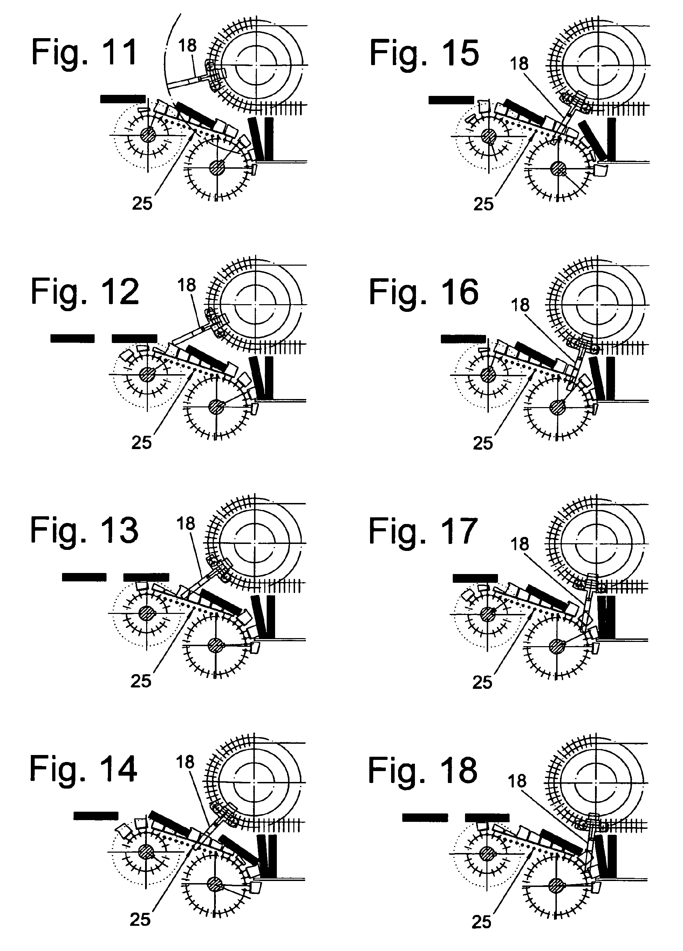

Figures 11-18 schematically show the cooperation of such chain 25 with a paddle 18 to the introduction of the products into the device 16.

It has thus been observed that the plant for making and for continuous-synchronized transferring of compact groups of products drawn near to one another edgeways along the transfer path according to the present invention attains the previously outlined objects. Actually, the presence of the auxiliary paddle element provided by the present invention allows avoiding interrupting and slowing the input of the products during the travel to reposition the paddles after unloading a finished group to the packaging machine.

The plant for making and for continuous-synchronized transferring of compact groups of products drawn near to one another edgeways along the transfer path of the present invention thus conceived can be subjected to various modifications and variants, all falling within the same inventive concept; furthermore, all the details can be replaced by technically equivalent elements. In practice the materials used, as well as dimensions thereof, may vary according to the technical needs.

## Claims

1. Plant (10) for making and for continuous-synchronized transferring of compact groups (50) of products (51) drawn near one another along the transfer path, said plant (10) comprising upstream a first input conveyor (11) of one product at a time and downstream a second output conveyor (13) of compact groups of said products, between said first and second conveyor (11, 13) being foreseen a device (16) for making and for continuous-synchronized transferring of said groups of products, said device (16) comprising at least two paddle elements (18, 18') synchronically mobile along a looped path, said device (16) also comprises an auxiliary paddle element (20) synchronically mobile with said paddle elements (18, 18') so as to realize a front auxiliary counter-thruster for said new group of forming products in correspondence to a first part of said transfer path both during the transfer of a formerly finished group and during the path of repositioning of said paddles (18, 18') once the finished product is unloaded, **characterized in that** said at least two paddle elements (18, 18') are synchronically mobile along a looped path so as to realize alternatively a rear thruster and a front counter-thruster for said groups of products along said transfer path, in which at the end of the transfer path the paddle element (18, 18') that forms the front counter-thruster proceeds along a back stretch of the looped path to return to the start of the transfer path and to become back rear thruster of a next group of products, whereas the paddle element (18, 18') that forms the rear thruster of the pair recedes along the transfer path to return towards the start and become front counter-thruster of a new forming group, said device (16) for making and for continuous-synchronized transferring of said groups (50) of products (51) comprising an advancing surface (17) of said groups (50), said paddle elements (18, 18') acting over said surface (17), said auxiliary paddle element (20) being arranged on a slide mobile (21) parallel and underneath said surface (17), said auxiliary paddle element (20) also being mobile orthogonally to said surface (17) between a first position, wherein it is completely underneath said surface (17), and a second position wherein it leans at least partially over said surface (17) through a loophole (22).

2. Plant (10) according to any of the previous claims **characterized in that** it comprises between said first conveyor (11) and said device (16) a chain (25) consisting of a series of increasing bearings (26).

3. Plant (10) according to any of the previous claims **characterized in that** said first input conveyor (11) and said second output conveyor (13) are orthogonal one another.

4. Plant (10) according to any of the previous claims **characterized in that** said paddle elements (18, 18') are independently motorized.

5. Plant (10) according to any of the previous claims **characterized in that** said auxiliary paddle element (20) is independently motorized.

6. Plant (10) according to any of the previous claims **characterized in that** said paddle elements (18, 18') are U-shaped so as to accommodate internally at least partially said auxiliary paddle element (20).

7. Plant (10) according to any of the previous claims **characterized in that** said auxiliary paddle element (20) is fork-shaped.

8. Plant (10) according to claim 1 **characterized in that** said slide (21) is mobile underneath said surface (17) on parallel (23) and orthogonal guides (24) to said surface (17).

9. Plant (10) according to claim 1 **characterized in that** said slide (21) is mobile underneath said surface (17) on guides parallel (23) to said surface (17), said auxiliary paddle element (20) comprising two telescopic coupled elements so that in a withdrawn position said auxiliary paddle element (20) is placed underneath said surface (17), and in an extract position crosses said loophole (22) of said surface (17) to get in touch with said products.

## Patentansprüche

1. Anlage (10) zum Bilden und zur kontinuierlichen synchronisierten Übertragung von kompakten Gruppen (50) von Produkten (51), die nahe beieinander längs des Übertragungswegs gezogen werden, wobei diese Anlage (10) vorgeordnet einen ersten Eingangsförderer (11) für jeweils ein Produkt und nachgeordnet einen zweiten Ausgangsförderer (13) für kompakte Gruppen dieser Produkte umfasst, wobei zwischen dem ersten und dem zweiten Förderer (11, 13) eine Vorrichtung (16) zum Bilden und zur kontinuierlichen synchronisierten Übertragung dieser Produktgruppen vorgesehen ist, wobei diese Vorrichtung (16) mindestens zwei Schaufelelemente (18, 18') umfasst, die entlang einer endlosschleifenförmigen Bahn synchron beweglich sind, wobei diese Vorrichtung (16) außerdem ein Hilfsschaufelelement (20) umfasst, das synchron mit den Schaufelelementen (18, 18') bewegt werden kann, um einen vorderen Hilfsgegenschieber für die sich bildende neue Produktgruppe in Entsprechung mit einem ersten Teil des Übertragungswegs sowohl während der Übertragung einer zuvor fertiggestellten Gruppe als auch auf dem Weg für die erneute Positionierung der Schaufeln (18, 18') nach dem Entladen des fertigen Produkts zu realisieren, **dadurch gekennzeichnet, dass** die mindestens zwei Schaufelelemente (18, 18') entlang einer endlosschleifenförmigen Bahn synchron bewegt werden können, um alternativ einen hinteren Schieber und einen vordereren Gegenschieber für die Produktgruppen entlang dem Übertragungsweg zu realisieren, wobei das Schaufelelement (18, 18'), das den vorderen Gegenschieber bildet, am Ende des Übertragungswegs entlang einem rückseitigen Stück der endlosschleifenförmigen Bahn weiterläuft, um zum Anfang des Übertragungswegs zurückzukehren und der rückseitige hintere Schieber einer nächsten Produktgruppe zu werden, während das Schaufelelement (18, 18'), das den hinteren Schieber des Paars bildet, entlang dem Übertragungsweg zurückläuft, um in Richtung des Anfangs zurückzukehren und der vordere Gegenschieber einer neuen sich bildenden Gruppe zu werden, wobei diese Vorrichtung (16) zum Bilden und zur kontinuierlichen synchronisierten Übertragung dieser Gruppen (50) von Produkten (51) eine Vorschubfläche (17) für diese Gruppen (50) umfasst, wobei die Schaufelelemente (18, 18') über dieser Fläche (17) wirken, wobei das Hilfsschaufelelement (20) auf einem beweglichen Schlitten (21) angeordnet ist, der parallel zur und unterhalb der Fläche (17) ist, wobei das Hilfsschaufelelement (20) außerdem rechtwinklig zu dieser Fläche (17) zwischen einer ersten Position, in der es sich vollständig unterhalb dieser Fläche (17) befindet, und einer zweiten Position beweglich ist, in der es sich durch eine Lücke (22) zumindest teilweise über diese Fläche (17) neigt.

2. Anlage (10) nach einem der vorherigen Ansprüche, **dadurch gekennzeichnet, dass** sie zwischen dem ersten Förderer (11) und der Vorrichtung (16) eine Kette (25) umfasst, die aus einer Reihe von sich vergrößernden Auflagern (26) besteht.

3. Anlage (10) nach einem der vorherigen Ansprüche, **dadurch gekennzeichnet, dass** der erste Eingangsförderer (11) und der zweite Ausgangsförderer (13) rechtwinklig zueinander sind.

4. Anlage (10) nach einem der vorherigen Ansprüche, **dadurch gekennzeichnet, dass** die Schaufelelemente (18, 18') unabhängig angetrieben werden.

5. Anlage (10) nach einem der vorherigen Ansprüche, **dadurch gekennzeichnet, dass** das Hilfsschaufelelement (20) unabhängig angetrieben wird.

6. Anlage (10) nach einem der vorherigen Ansprüche, **dadurch gekennzeichnet, dass** die Schaufelelemente (18, 18') U-förmig sind, um das Hilfsschaufelelement (20) zumindest teilweise innen aufzunehmen.

7. Anlage (10) nach einem der vorherigen Ansprüche, **dadurch gekennzeichnet, dass** das Hilfsschaufelelement (20) gabelförmig ist.

8. Anlage (10) nach Anspruch 1, **dadurch gekennzeichnet, dass** der Schlitten (21) unterhalb der Fläche (17) auf zu dieser Fläche (17) parallelen (23) und rechtwinkligen Führungen (24) beweglich ist.

9. Anlage (10) nach Anspruch 1, **dadurch gekennzeichnet, dass** der Schlitten (21) unterhalb der Fläche (17) auf zu dieser Fläche (17) parallelen Führungen (23) beweglich ist, wobei das Hilfsschaufelelement (20) zwei teleskopische verbundene Elemente umfasst, so dass sich das Hilfsschaufelelement (20) in einer eingefahrenen Stellung unterhalb der Fläche (17) befindet und in einer ausgefahrenen Stellung die Lücke (22) der Fläche (17) durchquert, um die Produkte zu berühren.

## Revendications

1. Installation (10) pour la formation et pour le transfert synchronisé continu de groupes compacts (50) de produits (51) tirés l'un près de l'autre le long du parcours de transfert, ladite installation (10) comprenant, en amont, un premier convoyeur d'entrée (11) d'un produit à la fois et, en aval, un deuxième convoyeur de sortie (13) de groupes compacts desdits produits, entre lesdits premier et deuxième convoyeurs (11, 13) étant prédisposé un dispositif (16) pour la formation et pour le transfert synchronisé continu desdits groupes de produits, ledit dispositif (16) comprenant au moins deux éléments de palette (18, 18') mobiles de manière synchronisée le long d'un parcours en boucle, ledit dispositif (16) comprend également un élément de palette auxiliaire (20) mobile de manière synchronisée avec lesdits éléments de palette (18, 18') de manière à réaliser un système de contre-poussée auxiliaire avant pour ledit nouveau groupe de produits en formation en correspondance d'une première partie dudit parcours de transfert à la fois durant le transfert d'un groupe fini précédemment et durant le parcours de repositionnement desdites palettes (18, 18') une fois que le produit fini est déchargé, **caractérisé en ce que** lesdits au moins deux éléments de palette (18, 18') sont mobiles de manière synchronisée le long d'un parcours en boucle de manière à réaliser alternativement un système de poussée arrière et un système de contre-poussée avant pour lesdits groupes de produits le long dudit parcours de transfert, dans laquelle, à la fin du parcours de transfert, l'élément de palette (18, 18') qui forme le système de contre-poussée avant poursuit le long d'un tronçon de retour du parcours en boucle pour retourner au début du parcours de transfert et redevenir un système de poussée arrière d'un groupe de produits suivant, alors que l'élément de palette (18, 18') qui forme le système de poussée arrière de la paire s'éloigne le long du parcours de transfert pour retourner vers le début et devenir un système de contre-poussée avant pour un nouveau groupe en formation, ledit dispositif (16) pour la formation et pour le transfert synchronisé continu desdits groupes (50) de produits (51) comprenant une surface d'avance (17) desdits groupes (50), lesdits éléments de palette (18, 18') agissant au-dessus de ladite surface (17), ledit élément de palette auxiliaire (20) étant agencé sur une glissière mobile (21) parallèle et au-dessous de ladite surface (17), ledit élément de palette auxiliaire (20) étant également mobile orthogonalement à ladite surface (17) entre une première position, dans laquelle il est complètement au-dessous de ladite surface (17), et une deuxième position dans laquelle il repose au moins partiellement au-dessus de ladite surface (17) à travers une échappatoire (22).

2. Installation (10) selon l'une quelconque des revendications précédentes, **caractérisée en ce qu'**elle comprend, entre ledit premier convoyeur (11) et ledit dispositif (16), une chaîne (25) composée d'une série d'éléments de support croissants (26).

3. Installation (10) selon l'une quelconque des revendications précédentes, **caractérisée en ce que** ledit premier convoyeur d'entrée (11) et ledit deuxième convoyeur de sortie (13) sont orthogonaux entre eux.

4. Installation (10) selon l'une quelconque des revendications précédentes, **caractérisée en ce que** lesdits éléments de palette (18, 18') sont motorisés indépendamment.

5. Installation (10) selon l'une quelconque des revendications précédentes, **caractérisée en ce que** ledit élément de palette auxiliaire (20) est motorisé indépendamment.

6. Installation (10) selon l'une quelconque des revendications précédentes, **caractérisée en ce que** lesdits éléments de palette (18, 18') sont en forme de U de manière à recevoir à l'intérieur au moins partiellement ledit élément de palette auxiliaire (20).

7. Installation (10) selon l'une quelconque des revendications précédentes, **caractérisée en ce que** ledit élément de palette auxiliaire (20) est en forme de fourche.

8. Installation (10) selon la revendication 1, **caractérisée en ce que** ladite glissière (21) est mobile au-dessous de ladite surface (17) sur des guides parallèles (23) et orthogonaux (24) à ladite surface (17).

9. Installation (10) selon la revendication 1, **caractérisée en ce que** ladite glissière (21) est mobile au-dessous de ladite surface (17) sur des guides parallèles (23) à ladite surface (17), ledit élément de palette auxiliaire (20) comprenant deux éléments accouplés télescopiques de manière que, dans une position rentrée, ledit élément de palette auxiliaire (20) soit placé au-dessous de ladite surface (17) et dans une position extraite, il traverse ladite échappatoire (22) de ladite surface (17) pour venir en contact avec lesdits produits.
